# EUROPÄISCHE PATENTSCHRIFT

(11) **EP 0 711 648 B1**
(45) Veröffentlichungstag und Bekanntmachung des Hinweises auf die Patenterteilung: **05.04.2000**
(21) Anmeldenummer: 95116256.9
(22) Anmeldetag: 16.10.1995
(51) Int. Cl.: B29C 47/00, B29C 47/34, B65H 23/32, B65H 23/00

(54) **Abzugsvorrichtung**
Pull-off device
Dispositif pour le tirage

(30) Priorität: 14.11.1994 DE 4440647
(43) Veröffentlichungstag der Anmeldung: 15.05.1996
(73) Patentinhaber: Windmöller & Hölscher, D-49525 Lengerich (DE)
(72) Erfinder: Sensen, Klemens, D-49525 Lengerich (DE); Beckmann, Hans-Udo, D-49525 Lengerich (DE); Linkies, Jürgen, D-49536 Lienen (DE); Kötter, Egon, D-49549 Ladbergen (DE); Krause, Ulrich, D-49536 Lienen (DE)

(56) Entgegenhaltungen:
- EP-A- 0 345 989
- EP-A- 0 658 506
- GB-A- 2 262 087
- US-A- 3 491 655

## Beschreibung

Die Erfindung betrifft eine Abzugsvorrichtung für eine im Blasverfahren von einem Extruder hergestellte Kunststoff-Schlauchfolie mit einem den extrudierten Folienschlauch flachlegenden Abzugswalzenpaar und mit mindestens einer diesem nachgeordneten rotierenden Umlenkwalze und/oder mindestens einer nicht rotierenden mit Preßluft durchströmbaren Wendestange, wobei die Preßluft durch über den Mantel der Wendestange verteilte Bohrungen austritt.

Eine Abzugsvorrichtung für Kunststoff-Schlauchfolien ist beispielsweise aus der EP 0 191 114 B1 bekannt. Nach Flachlegen der aus dem Blaskopf eines Extruders austretgenden Kunststoff-Schlauchfolie wird diese über Wendestangen und Umlenkwalzen, die in der Regel reversierend angeordnet sind, geführt.

Nach dem Stand der Technik wurden die Wendestangen häufig derart ausgeführt, daß sie mit Preßluft durchströmbar sind, die durch über den Mantel der Wendestangen verteilte Bohrungen austreten kann, damit dann zwischen der Oberfläche der Wendestange und der über diese abgezogenen Kunststoff-Schlauchfolie ein Luftpolster gebildet wird. Insbesondere bei der Verarbeitung von haftenden bis klebenden Folien ist es besonders wünschenswert, mit großen Luftpolstern zu fahren, da dann die über die Wendestange geführte Folie auf der ganzen Breite der Wendestange schwimmt.

An reversierenden Abzügen mit Luftwendestangen tritt aber bei hohen Luftpolstern in der Mitte der Bahn eine Mittelfalte auf. Diese Mittelfalte verhindert ein einwandfreies Aufwickeln der Kunststoff-Schlauchfolie. In der Praxis wird daher mit weniger großen Luftpolstern gefahren, was zwar der Bildung von Falten im Mittelteil der Wendestange entgegenwirkt, aber gerade bei der Verarbeitung von haftenden bis klebenden Folien zu einer mehr oder weniger starken Berührung zwischen der Folie und der Wendestange führt.

Die gemäß dem Stand der Technik zylndrisch ausgeführten Wendestange, bei denen neben den zuvorgenannten Austrittsbohrungen auch teilweise Rillen, Nuten oder ähnliches vorgesehen sind, führen zu keiner Abhilfe hinsichtlich des Problems der vorgenannten Mittelfaltenbildung.

Auch durch die konvex ausgebildeten Wendestangen, wie sie beispielsweise aus der EP 0 658 506 A1 bekannt sind, läßt sich das Problem der Mittenfaltenbildung bei hohen Luftpolstern nicht lösen, vielmehr wird durch eine solche Ausbildung die Tendenz der Faltenbildung verstärkt.

Aufgabe der Erfindung ist es nun, eine Abzugsvorrichtung für eine im Blasverfahren von einem Extruder hergestellten Kunststoff-Schlauchfolie derart weiterzubilden, daß eine störungsfreie Verarbeitung auch von haftenden bis klebenden Folien ermöglicht wird. Insbesondere ist es Aufgabe der vorliegenden Erfindung, die Bildung einer Mittelfalte bei der abgezogenen Kunststoff-Schlauchfolie zu verhindern.

Erfindungsgemäß wird diese Aufgabe ausgehend von einer an sich bekannten Abzugsvorrichtung (beispielsweise DE 41 39 837 A1 - entspricht der GB-A-2 262 087) für eine im Blasverfahren von einem Extruder hergestellten Kunststoff-Schlauchfolie dadurch gelöst, daß die Oberfläche der mindest einen Wendestange konkav ausgebildet ist.

Zusätzlich kann die Wendestange in vorteilhafter Art und Weise in ihrem mittleren Bereich eine reibungsarme Oberfläche aufweisen, während sie in ihren Randbereichen eine stärker reibende, also reibungsbehaftete Oberfläche aufweist. Die reibungsarme Oberfläche im mittleren Bereich kann durch entsprechende Hartverchromung der Oberfläche realisiert werden, während die reibungsbehaftetere Oberfläche durch entsprechendes Aufrauhen der Oberfläche geschaffen werden kann.

Gemäß einer vorteilhaften Ausbildung macht der mittlere Bereich ca. 1/3 der Länge aus, während die jeweiligen Randbereiche auch jeweils 1/3 der Gesamtlänge der Umlenkwalze ausmachen. Alternativ dazu kann der mittlere Bereich auch ungejfähr die halbe Länge der Oberfläche ausmachen, während die Randbereiche dann jeweils 1/4 der Länge umfassen.

Aus der US-PS 3,491,655 ist ein rotierendes Abzugswalzenpaar bekannt, das einer Schlauchfolienblasanlage nachgeschaltet ist, durch welches der Folienschlauch flachgelegt wird. Durch das Flachlegen eines Schlauches treten aber in den Randbereichen unterschiedliche Geschwindigkeiten auf als im mittleren Bereich. Um diese Geschwindigkeitsunterschiede zu kompensieren, ist eine Walze des Abzugswalzenpaares konkav und die mit dieser korrespondierende andere Walze konvex ausgebildet ist, so daß ein unterschiedlicher Geschwindigkeitsgradient zwischen dem Zentrum des Rollenpaares und seinen Enden erreicht wird. Da zum einen die konkav ausgebildete Walze den ihr zugedachten Zweck nur in Verbindung mit einer konkav ausgebildeten Walze als geschwindigkeitsausgleichendes Abzugswalzenpaar erfüllen kann und zum anderen die Walzen nicht luftdurchströmt sind, ist durch diese Schrift unsere Erfindung weder vorweggenommen noch nahegelegt.

Die EP 0 345 989 A2 offenbart eine Vorrichtung zum Vereinzeln von Bögen aus einem Stapel mittels einer Walze, die auf ihrer Länge vorstehende Elemente zum Erfassen einzelner Bögen aufweist. Diese Vorrichtung hat mit dem Gegenstand unserer Erfindung keine Gemeinsamkeiten.

Einzelheiten und Vorteile der Erfindung werden anhand eines in der Zeichnung dargestellten Ausführungsbeispieles näher erläutert.

Es zeigen:
- Figur 1:: eine Wendestange gemäß der vorliegenden Erfindung ohne Luftpolster,
- Figur 2:: eine Abzugsvorrichtung in perspektivischer Ansicht in einer ersten Arbeitsstellung,
- Figur 3:: eine Abzugsvorrichtung in perspektivischer Ansicht in einer zweiten Arbeitsstellung,
- Figur 4:: eine Wendestange gemäß dem Stand der Technik und
- Figur 5:: eine Wendestange gemäß der Erfindung mit Luftpolster.

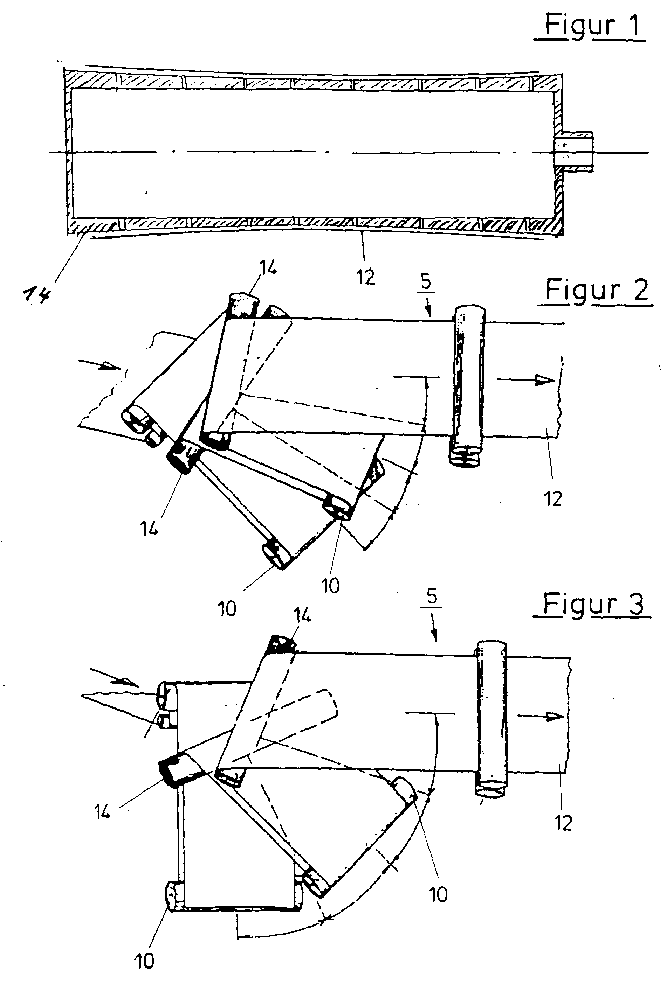

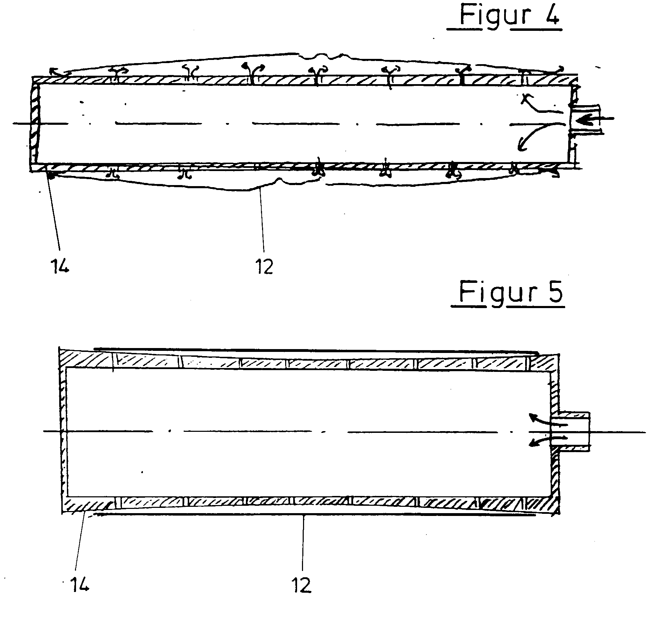

In Figur 1 ist eine Wendestange 14 gemäß der vorliegenden Erfindung dargestellt, die von einer Schlauchfolienbahn 12 teilumschlungen ist, ohne Luftpolster zwischen der Schlauchfolienbahn und der Wendestange. Diese Wendestange 14 unterscheidet sich von einer herkömmlichen Wendestange dadurch, daß ihre Oberfläche konkav ausgebildet ist. Im hier dargestellten Ausführungsbeispiel ist der mittlere Bereich der Wendestange, der ungefähr 1/3 der Länge der Wendestange 14 umfaßt, auf seiner Oberfläche hart verchromt, so daß sich hier eine reibungsarme Oberfläche ergibt. Auf den Seiten ist die Oberfläche jeweils aufgerauht, so daß hier eine reibungsbehaftete Oberfläche geschaffen ist. Die jeweiligen Seitenbereiche umfassen ebenfalls jeweils ca. 1/3 der Gesamtlänge der Wendestange 14. In den Figuren 1 und 2 sind reversierende Abzugsvorrichtungen 5 in verschiedenen Winkelstellungen dargestellt. Die Kunsttoffschlauchfolie durchläuft die Abzugsvorrichtung in Pfeilrichtung. Mit 10 sind die beiden Umlenkwalzen bezeichnet, mit 14 die jeweiligen Wendestangen. Durch die entsprechende konkave Ausgestaltung der Wendestange 14 wird die Faltenbildung im Mittelbereich der Kunststoff-Schlauchfolie wirksam verhindert, indem ein Luftpolster aufgebaut ist, das die Folie insbesondere im mittleren Bereich aus der in Figur 1 dargestellten nach innen durchgebogenen Lage lediglich horizontal ausrichtet und sie nicht, wie die Figur 4 zeigt, überstreckt, wodurch Falten entstehen würden.

## Patentansprüche

1. Abzugsvorrichtung (5) für eine im Blasverfahren von einem Extruder hergestellte Kunststoff-Schlauchfolie (12) mit einem den extrudierten Folienschlauch (12) flachlegenden Abzugswalzenpaar und mit mindestens einer diesem nachgeordneten rotierenden Umlenkwalze (10) und mindestens einer nicht rotierenden mit Preßluft durchströmbaren Wendestange (14), wobei die Preßluft durch über den Mantel der Wendestange (14) verteilte Bohrungen austritt,
**dadurch gekennzeichnet,**
daß die Oberfläche der mindestens einen Wendestange (14) konkav ausgebildet ist.

2. Abzugsvorrichtung nach Anspruch 1, dadurch gekennzeichnet, daß die mindestens eine Wendestange (14) in ihrem mittleren Bereich eine reibungsarme Oberfläche aufweist, während sie in ihren Randbereichen eine reibungsbehaftete Oberfläche aufweist.

3. Abzugsvorrichtung nach Anspruch 2, dadurch gekennzeichnet, daß der mittlere Bereich ca. 1/3 der Länge ausmacht, während die Randbereiche jeweils wieder ca. 1/3 der Länge ausmachen.

4. Abzugsvorrichtung nach Anspruch 2, dadurch gekennzeichnet, daß der mittlere Bereich ca. die Hälfte der Länge ausmacht, während die Randbereiche jeweils ca. 1/4 der Länge ausmachen.

5. Abzugsvorrichtung nach einem der Ansprüche 2-4, dadurch gekennzeichnet, daß der mittlere Bereich hartverchromt ist.

6. Abzugsvorrichtung nach einem der Ansprüche 2-5, dadurch gekennzeichnet, daß die seitlichen Bereiche aufgerauht sind.

## Claims

1. Pull-off device (5) for a tubular plastics film (12) produced by film blowing by means of an extruder, having a pair of pull-off rollers which flatten the extruded tubular film (12) and having at least one rotating deflection roller (10) arranged downstream of the said pair and at least one non-rotating reversing rod (14) through which compressed air can flow, the compressed air emerging through holes distributed over the circumferential surface of the reversing rod (14), characterized in that the surface of the at least one reversing rod (14) is of concave design.

2. Pull-off device according to Claim 1, characterized in that the at least one reversing rod (14) has a low-friction surface in its central area, while it has a surface exhibiting friction in its edge areas.

3. Pull-off device according to Claim 2, characterized in that the central area makes up about 1/3 of the length, while the edge areas again each make up about 1/3 of the length.

4. Pull-off device according to Claim 2, characterized in that the central area makes up about half the length, while the edge areas each make up about 1/4 of the length.

5. Pull-off device according to one of Claims 2-4, characterized in that the central area is hard-chrome plated.

6. Pull-off device according to one of Claims 2-5, characterized in that the lateral areas are roughened.

## Revendications

1. Dispositif de tirage (S) pour une feuille tubulaire en matière synthétique (12) fabriqué par un procédé de soufflage par une extrudeuse, avec une paire de rouleaux de tirage aplatissant la feuille tubulaire extrudée (12) et avec au moins un rouleaux de renvoi tournant (10) disposé en aval de celle-ci et avec au moins une barre de retournement (14) non tournante, traversée par de l'air comprimé, où l'air comprimé sort par les perçages répartis sur l'enveloppe de la barre de retournement (14), caractérisé en ce que la surface d'au moins une barre de retournement (14) précitée est réalisée d'une manière concave.

2. Dispositif de tirage selon la revendication 1, caractérisé en ce qu'au moins une barre de retournement précitée (14) présente dans sa zone centrale une surface pauvre en frottement tandis qu'elle présente dans ses zones de bord une surface à frottement.

3. Dispositif de tirage selon la revendication 2, caractérisé en ce que la zone médiane représente environ 1/3 de la longueur, tandis que les zones de bord représentent chacune de nouveau environ 1/3 de la longueur.

4. Dispositif de tirage selon la revendication 2, caractérisé en ce que la zone médiane représente environ la moitié de la longueur tandis que les zones de bord représentent chacune environ 1/4 de la longueur.

5. Dispositif de tirage selon l'une des revendications 2 - 4, caractérisé en ce que la zone centrale a été chromée dure.

6. Dispositif de tirage selon l'une des revendications 2 à 5, caractérisé en ce que les zones latérales ont été rendues rugueuses.
